# EUROPEAN PATENT APPLICATION

(11) **EP 2 996 072 A1**
(43) Date of publication of application: **16.03.2016**
(21) Application number: 14794315.3
(22) Date of filing: 04.03.2014
(51) Int. Cl.: G06Q 10/04, G01W 1/10

(54) **INFORMATION CONVERSION DEVICE AND METEOROLOGICAL FORECAST SYSTEM**

(30) Priority: 10.05.2013 JP 2013100341
(71) Applicant: Kabushiki Kaisha Toshiba, Minato-ku Tokyo 105-8001 (JP)
(72) Inventor: WADA, Masakazu, Tokyo 105-8001 (JP)
(74) Representative: Moreland, David
(86) International application number: PCT/JP2014/055437
(87) International publication number: WO 2014/181572

(57) **Abstract**

An information conversion apparatus (103) is used in a weather prediction system including a weather sensor (21) and a weather model calculation apparatus (102). The information conversion apparatus (103) includes an observation data conversion unit (1031) and a social model conversion unit (1032). The observation data conversion unit (1031) receives observation data obtained by observing a quantity of state in a social infrastructure (11, 12, 13, 14, 15), converts the received observation data into a format reflectable on the weather model, and transmits the converted data to the weather model calculation apparatus (102). The social model conversion unit (1032) receives social model data that simulatively predicts the quantity of state in the social infrastructure (11, 12, 13, 14, 15), converts the received social model data into the format reflectable on the weather model, and transmits the converted data to the weather model calculation apparatus (102).

## Description

### Technical Field

Embodiments described herein relate generally to an information conversion apparatus for converting observation data acquired by a social sensor used in a social infrastructure and social model data calculated by a social model that simulates a social activity in a social infrastructure into data usable in weather prediction, and a weather prediction system using this apparatus.

### Background Art

A weather phenomenon is conventionally predicted by atmospheric simulation software called a weather model using equations of fluid dynamics, thermodynamics, and the like. Weather phenomena affect many social activities. For example, if the air temperature rises in summer, the power demand increases for cooling by air conditioners and the like. On the other hand, if the air temperature falls in winter, the demand for electric power and gas increases for heating. Hence, weather model data calculated by a weather model is used in social models that simulate social activities in social infrastructures, and aids in predicting the power demand and the like.

In recent years, however, the social activities have scaled up, affecting the weather phenomena. For example, if the power consumption and the gas consumption increase, heat is emitted to a space, and the air temperature rises. However, the weather models do not consider the influence of the social activities. That is, social model data calculated using a social model is not used in the weather models.

Similarly, although weather data such as the air temperature, humidity, and rain observed by weather sensors are used in the social models, observation data such as a power consumption, power generation amount, and traffic observed by social sensors used in the social infrastructures are not used in the weather models. Citation List

### Patent Literatures

Patent Literature 1: Jpn. Pat. Appln. KOKAI Publication No. 2005-134243 Summary of Invention

### Technical Problem

As described above, weather data and weather model data are conventionally used to calculate social model data in a social model. However, observation data and social model data are not used in a weather model.

It is an object of the present invention to provide an information conversion apparatus capable of converting observation data and social model data such that they are usable by a weather model, and a weather prediction system that predicts weather using, in the weather model, the observation data and social model data converted by the apparatus.

### Solution to Problem

According to an embodiment, an information conversion apparatus is used in a weather prediction system including a weather sensor and a weather model calculation apparatus. The weather sensor generates weather data by observing a weather element. The weather model calculation apparatus integrates wide area weather prediction information and the weather data into a weather model formed in advance and executes a simulation by the weather model, thereby calculating weather model data that predicts weather in a local region. The information conversion apparatus includes an observation data conversion unit and a social model conversion unit. The observation data conversion unit receives observation data obtained by observing a quantity of state in a social infrastructure, converts the received observation data into a format reflectable on the weather model, and transmits the conversion data to the weather model calculation apparatus. The social model conversion unit receives social model data that simulatively predicts the quantity of state in the social infrastructure, converts the received social model data into the format reflectable on the weather model, and transmits the conversion data to the weather model calculation apparatus.

### Brief Description of Drawings

[FIG. 1] FIG. 1 is a view showing the arrangement of a weather prediction system according to the first embodiment.
[FIG. 2] FIG. 2 is a block diagram showing the functional arrangement of the weather prediction system shown in FIG. 1.
[FIG. 3] FIG. 3 is a block diagram showing the functional arrangement of an information conversion apparatus shown in FIG. 2.
[FIG. 4] FIG. 4 is a flowchart of the weather prediction system shown in FIG. 1 when calculating weather model data.
[FIG. 5] FIG. 5 is a view showing the arrangement of a weather prediction system according to the second embodiment.

### Description of Embodiments

Embodiments will now be described with reference to the accompanying drawings.

### (First Embodiment)

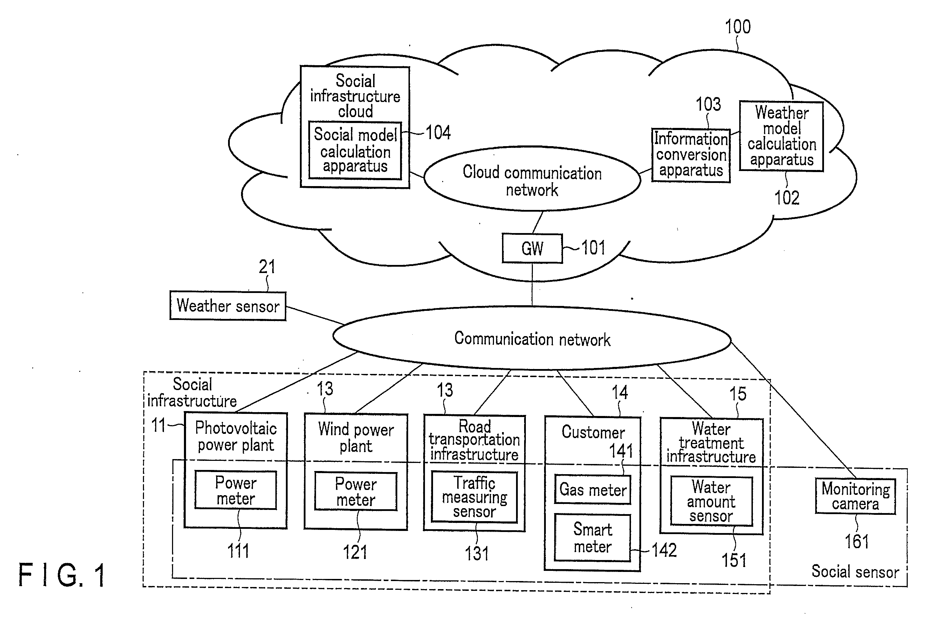

FIG. 1 is a view showing the arrangement of a weather prediction system according to the first embodiment. FIG. 1 shows a photovoltaic power plant 11, a wind power plant 12, a road transportation infrastructure 13, a customer 14, and a water treatment infrastructure 15 as examples of social infrastructures. Note that the social infrastructures are not limited these, and there exist a variety of other social infrastructures such as a heat supply infrastructure and a medical infrastructure.

The photovoltaic power plant 11, the wind power plant 12, the road transportation infrastructure 13, the customer 14, and the water treatment infrastructure 15 include social sensors. For example, the photovoltaic power plant 11 includes a power meter 111 that measures a photovoltaic power generation amount. The wind power plant 12 includes a power meter 121 that measures a wind power generation amount. The road transportation infrastructure 13 includes a traffic measuring sensor 131 that measures traffic. The customer 14 includes a gas meter 141 that measures a gas consumption by the customer 14, and a smart meter 142 that measures a power consumption by the customer 14. The water treatment infrastructure 15 includes a water amount sensor 151 that measures the amount of water used by the customer 14.

A monitoring camera 161 is a social sensor that monitors cloud movement. Note that FIG. 1 shows a case where the monitoring camera 161 does not belong to any social infrastructure. However, the monitoring camera 161 may be provided in a social infrastructure out of the photovoltaic power plant 11, the wind power plant 12, the road transportation infrastructure 13, the customer 14, the water treatment infrastructure 15, and the like.

A weather sensor 21 is arranged in each place, and includes a thermometer/hygrometer, a pyrheliometer, a wind vane and anemometer, a ground rain gauge, and the like. The thermometer/hygrometer measures the temperature and humidity. The pyrheliometer measures the solar irradiation. The wind vane and anemometer measures a wind direction and wind velocity. The ground rain gauge measures the amount of rainfall.

The photovoltaic power plant 11, the wind power plant 12, the road transportation infrastructure 13, the customer 14, the water treatment infrastructure 15, the monitoring camera 161, and the weather sensor 21 are connected to the communication line of a communication network.

A cloud computing system 100 is connected to the communication network by the communication line via a gateway (GW) 101. In this embodiment, the communication network will be described as an example of a guarantee-type network. That is, in this embodiment, the cloud computing system 100, the infrastructures 11 to 15, the monitoring camera 161, and the weather sensor 21 are connected via the network capable of guaranteeing the communication band. As the communication network, a dedicated network using an optical communication technology, a VPN (Virtual Private Network) built in an IP (Internet Protocol) network, or the like is employed.

The cloud computing system 100 includes a weather model calculation apparatus 102, an information conversion apparatus 103, and a social model calculation apparatus 104. The weather model calculation apparatus 102 is connected to a cloud communication network via the information conversion apparatus 103. The social model calculation apparatus 104 is included in a social infrastructure cloud, and formed from a server comprising a single computer or an aggregate of a plurality of computers and a database. The database can be provided in one computer or distributed to a plurality of computers.

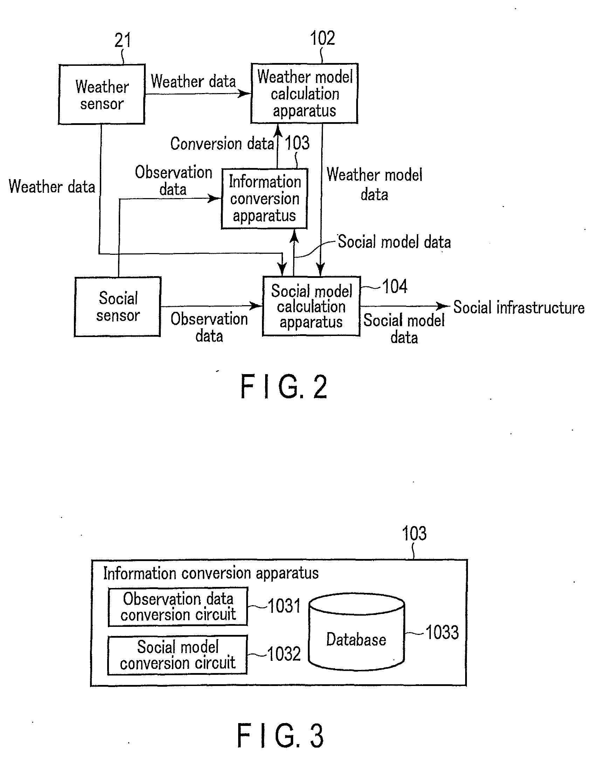

FIG. 2 is a block diagram showing the functional arrangement of the weather prediction system shown in FIG. 1.

The weather sensor 21 includes a thermometer/hygrometer, a pyrheliometer, a wind vane and anemometer, a ground rain gauge, and the like. The thermometer/hygrometer transmits a measured temperature and humidity to the weather model calculation apparatus 102 and the social model calculation apparatus 104 as weather data. The pyrheliometer transmits a measured solar irradiation to the weather model calculation apparatus 102 and the social model calculation apparatus 104 as weather data. The wind vane and anemometer transmits a measured wind direction and wind velocity to the weather model calculation apparatus 102 and the social model calculation apparatus 104 as weather data. The ground rain gauge transmits a measured amount of rainfall to the weather model calculation apparatus 102 and the social model calculation apparatus 104 as weather data.

The social sensor includes the power meters 111 and 121, the traffic measuring sensor 131, the gas meter 141, the smart meter 142, and the monitoring camera 161. The power meter 111 transmits a measured photovoltaic power generation amount to the information conversion apparatus 103 and the social model calculation apparatus 104 as observation data. The power meter 121 transmits a measured wind power generation amount to the information conversion apparatus 103 and the social model calculation apparatus 104 as observation data. The traffic measuring sensor 131 transmits measured traffic to the information conversion apparatus 103 and the social model calculation apparatus 104 as observation data. The gas meter 141 transmits a measured gas consumption to the information conversion apparatus 103 and the social model calculation apparatus 104 as observation data. The smart meter 142 transmits a measured power consumption to the information conversion apparatus 103 and the social model calculation apparatus 104 as observation data. The water amount sensor 151 transmits a measured water amount to the information conversion apparatus 103 and the social model calculation apparatus 104 as observation data.

The social model calculation apparatus 104 periodically collects weather data transmitted from the weather sensor 21 and observation data transmitted from the social sensor. In addition, the social model calculation apparatus 104 receives weather model data that is weather information predicted by the weather model calculation apparatus 102. The social model calculation apparatus 104 reflects the weather data, observation data, and weather model data on a social model. The social model is a model that simulates a social activity in a social infrastructure. The social model calculation apparatus 104 executes a simulation by the social model, thereby calculating social model data. The social model data is used to predict a quantity of state in the social infrastructure. The social model calculation apparatus 104 transmits the calculated social model data to each social infrastructure and the information conversion apparatus 103.

For example, the social model calculation apparatus 104 records the relationship between the photovoltaic power generation amount included in the observation data and the air temperature and solar irradiation included in the weather data as a past result. The social model calculation apparatus 104 collates the air temperature and solar irradiation included in the weather model data with the past result, and predicts the photovoltaic power generation amount. The social model calculation apparatus 104 transmits the predicted photovoltaic power generation amount to the photovoltaic power plant 11 and the information conversion apparatus 103. In the photovoltaic power plant 11, an apparatus in the house is driven in accordance with the predicted photovoltaic power generation amount.

The social model calculation apparatus 104 also records the relationship between the wind power generation amount included in the observation data and the wind direction and wind velocity included in the weather data as a past result. The social model calculation apparatus 104 collates the wind direction and wind velocity included in the weather model data with the past result, and predicts the wind power generation amount. The social model calculation apparatus 104 transmits the predicted wind power generation amount to the wind power plant 12 and the information conversion apparatus 103. In the wind power plant 12, an apparatus in the house is driven in accordance with the predicted wind power generation amount.

The social model calculation apparatus 104 also records the relationship between the traffic included in the observation data and the wind direction and wind velocity and the amount of rainfall included in the weather data as a past result. The social model calculation apparatus 104 collates the wind direction and wind velocity and the amount of rainfall included in the weather model data with the past result, and predicts the traffic distribution. The social model calculation apparatus 104 transmits the predicted traffic distribution to the road transportation infrastructure 13 and the information conversion apparatus 103. In the road transportation infrastructure 13, an apparatus in the infrastructure is driven in accordance with the predicted traffic distribution.

The social model calculation apparatus 104 also records the relationship between the gas consumption included in the observation data and the air temperature included in the weather data as a past result. The social model calculation apparatus 104 collates the air temperature included in the weather model data with the past result, and predicts the gas demand. The social model calculation apparatus 104 transmits the predicted gas demand to the customer 14. The customer 14 exists in a gas supply area where the gas is supplied, and a device in a building or home is driven in accordance with the predicted gas demand. Based on the predicted gas demand, the social model calculation apparatus 104 creates a planar distribution of gas demand representing the gas demand in each gas supply area. The social model calculation apparatus 104 transmits the created planar distribution of gas demand to the information conversion apparatus 103.

The social model calculation apparatus 104 also records the relationship between the power consumption included in the observation data and the air temperature and humidity included in the weather data as a past result. The social model calculation apparatus 104 collates the air temperature and humidity included in the weather model data with the past result, and predicts the power demand. The social model calculation apparatus 104 transmits the predicted power demand to the customer 14. The customer 14 exists in a power supply area where the power is supplied, and a device in a building or home is driven in accordance with the predicted power demand. Based on the predicted power demand, the social model calculation apparatus 104 creates a planar distribution of power demand representing the power demand in each gas supply area. The social model calculation apparatus 104 transmits the created planar distribution of power demand to the information conversion apparatus 103.

The social model calculation apparatus 104 also records the relationship between the water amount and power consumption included in the observation data and the air temperature and humidity included in the weather data as a past result. The social model calculation apparatus 104 collates the air temperature and humidity included in the weather model data and the power demand predicted by the social model calculation apparatus 104 with the past result, and predicts the water demand. The social model calculation apparatus 104 transmits the predicted water demand to the water treatment infrastructure 15. In the water treatment infrastructure 15, an apparatus in the infrastructure is driven in accordance with the predicted water demand.

As described above, the social model calculation apparatus 104 can obtain information useful for social activities by using weather model data calculated by the weather model calculation apparatus 102.

Note that as a method of referring to the past result in the social model calculation apparatus 104, for example, a method of statistically analyzing past information and thus creating an approximation representing the relationship between weather data and observation data in advance is usable. The social model calculation apparatus 104 substitutes the weather model data predicted by the weather model calculation apparatus 102 into the created approximation, thereby calculating social model data. In this way, the social model calculation apparatus 104 may perform large scale processing of approximate calculation in real time.

Alternatively, weather data and observation data may be associated in advance on table data or the like by statistical analysis of past information. The social model calculation apparatus 104 refers to the created table data, and calculates social model data from weather model data predicted by the weather model calculation apparatus 102. In this way, the social model calculation apparatus 104 may perform large scale processing for table data creation offline.

The information conversion apparatus 103 converts observation data transmitted from the social sensor and social model data transmitted from the social model calculation apparatus 104 such that they are usable by the weather model calculation apparatus 102. FIG. 3 is a block diagram showing the functional arrangement of the information conversion apparatus 103 according to the first embodiment. The information conversion apparatus 103 includes an observation data conversion unit 1031, a social model conversion unit 1032, and a database 1033. In the database 1033, observation data measured by the social sensor and weather data measured by the weather sensor 21 for a preset period, for example, one year are recorded.

The observation data conversion unit 1031 refers to past information recorded in the database 1033, and converts observation data measured by the social sensor into a format usable by the weather model calculation apparatus 102. The observation data conversion unit 1031 transmits the converted data to the weather model calculation apparatus 102.

For example, the observation data conversion unit 1031 refers to past information about a solar irradiation recorded in the database 1033, and converts a photovoltaic power generation amount measured by the power meter 111 into a solar irradiation. The observation data conversion unit 1031 also refers to past information about a wind velocity recorded in the database 1033, and converts a wind power generation amount measured by the power meter 121 into a wind velocity. The observation data conversion unit 1031 also refers to information about an amount of heat, an amount of emitted water vapor, and the like per vehicle recorded in the database 1033, and converts traffic measured by the traffic measuring sensor 131 into sensible heat and water vapor. The observation data conversion unit 1031 also refers to information about an amount of heat, an amount of emitted water vapor, and the like per gas consumption recorded in the database 1033, and converts a gas consumption measured by the gas meter 141 into sensible heat and water vapor. The observation data conversion unit 1031 also refers to information about an amount of heat per power consumption recorded in the database 1033, and converts a power consumption measured by the smart meter 142 into sensible heat. The observation data conversion unit 1031 also refers to past information about a cloud distribution recorded in the database 1033, and converts an image shot by the monitoring camera 161 into a cloud distribution.

The social model conversion unit 1032 predicts, from the planar distribution of gas demand, the planar distribution of power demand, and the traffic distribution predicted by the social model calculation apparatus 104, a heat generation amount at each grid point (to be described later) to be used by the weather model calculation apparatus 102. The heat generation amount corresponds to sensible heat from the earth's surface.

The social model conversion unit 1032 also predicts, from the planar distribution of gas demand and the traffic distribution predicted by the social model calculation apparatus 104, a water vapor generation amount at each grid point (to be described later) to be used by the weather model calculation apparatus 102. The social model conversion unit 1032 transmits the predicted heat generation amount and water vapor generation amount to the weather model calculation apparatus 102.

The weather model calculation apparatus 102 receives, as host model data, prediction data of weather elements on each grid point (provided from the Meteorological Agency twice a day at 9:00 and 21:00) which is called GPV (Grid Point Value) data such as GSM (Global Spectrum Model), RSM (Regional Spectrum Model), MSM (Mesoscale Spectrum Model), and ECMWF (European Centre for Medium-Range Weather Forecasts) distributed from the Meteorological Agency and overseas agencies. The weather model calculation apparatus 102 also periodically collects weather data measured by the weather sensor 21. The weather model calculation apparatus 102 also receives conversion data converted by the information conversion apparatus 103. The conversion data includes the cloud distribution, solar irradiation, wind velocity, sensible heat, and water vapor obtained by converting observation data, and the heat generation amount and water vapor generation amount obtained by converting social model data.

The weather model calculation apparatus 102 reflects the host model data, weather data, and conversion data on atmospheric simulation software called a weather model formed using equations of fluid dynamics, thermodynamics, and the like, and executes a simulation by the weather model, thereby predicting a weather phenomenon. The weather model calculation apparatus 102 thus calculates weather model data that is local weather prediction information at a grid interval smaller than the GPV data at a predetermined time while considering social activities in the social infrastructures. The weather model calculation apparatus 102 supplies the calculated weather model data to countries, local authorities, and companies that need the weather model data, and also transmits it to the social model calculation apparatus 104.

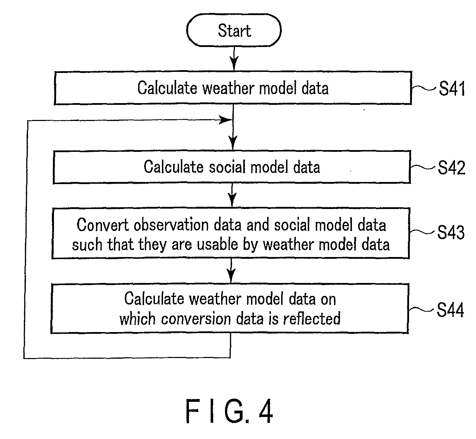

The operation of the weather prediction system configured as described above will be described below. FIG. 4 is a flowchart of the weather prediction system according to the first embodiment when calculating weather model data.

The weather model calculation apparatus 102 receives host model data and weather data, and executes a simulation by a weather model on which the received host model data and weather data are reflected (step S41). Weather model data that predicts a local weather state at a predetermined time is thus calculated. The weather model calculation apparatus 102 supplies the calculated weather model data to the social model calculation apparatus 104, and countries, local authorities, and companies that need the weather prediction data.

The social model calculation apparatus 104 calculates social model data based on weather data measured by the weather sensor 21, observation data observed by the social sensor, and the weather model data calculated by the weather model calculation apparatus 102 (step S42). The social model calculation apparatus 104 transmits the calculated social model data to the information conversion apparatus 103 and the social infrastructures.

The information conversion apparatus 103 converts the observation data observed by the social sensor and the social model data calculated by the social model calculation apparatus 104 into a format usable by the weather model in the weather model calculation apparatus 102 (step S43). The information conversion apparatus 103 transmits the conversion data to the weather model calculation apparatus 102.

The weather model calculation apparatus 102 receives host model data, weather data, and conversion data, and executes a simulation by a weather model on which the received host model data, weather data, and conversion data are reflected (step S44). Weather model data that predicts a local weather state at a predetermined time is thus calculated while considering the results of social activities in the social infrastructures. The weather model calculation apparatus 102 supplies the calculated weather model data to the social model calculation apparatus 104, and countries, local authorities, and companies that need the weather prediction data. The process thus returns to step S42.

As described above, in the first embodiment, the information conversion apparatus 103 converts observation data observed by the social sensor into a quantity of state reflectable on weather model data, and converts social model data calculated by the social model calculation apparatus 104 into a heat generation amount and water vapor generation amount. The information conversion apparatus 103 can thus convert the observation data and social model data such that they are usable by a weather model in the weather model calculation apparatus 102.

Hence, the information conversion apparatus 103 according to the first embodiment can adapt the observation data observed by the social sensor and the social model data calculated by the social model calculation apparatus 104 to a weather model in the weather model calculation apparatus 102.

Additionally, in the first embodiment, the weather model calculation apparatus 102 calculates weather model data using conversion data of observation data and social model data, host model data, and weather data. A phenomenon that occurs as the result of a social activity and directly affects a weather phenomenon, for example, an increase in the temperature and humidity can thus be reflected on a weather model.

Hence, according to the weather prediction system of the first embodiment, a weather state can accurately be predicted in consideration of social activities in social infrastructures. In addition, when a weather state is accurately predicted, the accuracy of a social model rises, resulting in efficient social activities.

### (Second Embodiment)

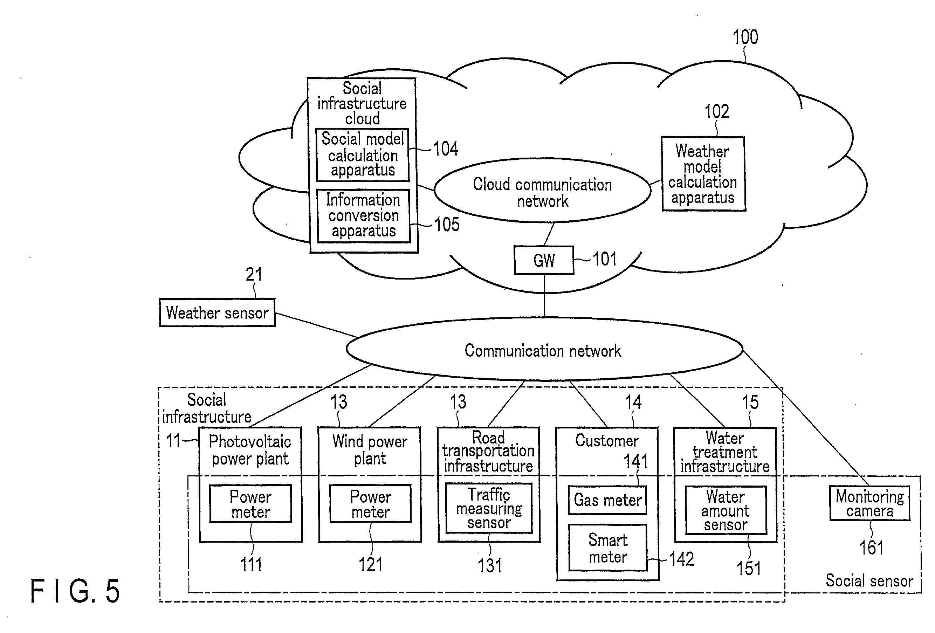

FIG. 5 is a view showing the arrangement of a weather prediction system according to the second embodiment. According to FIG. 5, an information conversion apparatus 105 is included in a social infrastructure cloud together with a social model calculation apparatus 104.

The information conversion apparatus 105 receives observation data observed by a social sensor and social model data calculated by the social model calculation apparatus 104, and converts these received data into a format usable by a weather model calculation apparatus 102. The information conversion apparatus 105 transmits the conversion data after conversion to the weather model calculation apparatus 102 via a cloud communication network.

Hence, the information conversion apparatus 105 according to the second embodiment can adapt the observation data observed by the social sensor and the social model data calculated by the social model calculation apparatus 104 to a weather model in the weather model calculation apparatus 102.

While certain embodiments of the inventions have been described, these embodiments have been presented by way of examples only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The appended claims and their equivalents are intended to cover such forms or modifications as would fall within the scope and spirit of the inventions.

## Claims

1. An information conversion apparatus (103, 105) used in a weather prediction system including:
a weather sensor (21) configured to generate weather data by observing a weather element; and
a weather model calculation apparatus (102) configured to integrate wide area weather prediction information and the weather data into a weather model formed in advance and execute a simulation by the weather model, thereby calculating weather model data that predicts weather in a local region,
the information conversion apparatus (103, 105) comprising:
an observation data conversion unit (1031) configured to receive observation data obtained by observing a quantity of state in a social infrastructure (11, 12, 13, 14, 15), convert the received observation data into a format reflectable on the weather model, and transmit the converted data to the weather model calculation apparatus (102); and
a social model conversion unit (1032) configured to receive social model data that simulatively predicts the quantity of state in the social infrastructure (11, 12, 13, 14, 15), convert the received social model data into the format reflectable on the weather model, and transmit the converted data to the weather model calculation apparatus (102).

2. The information conversion apparatus according to claim 1, wherein the observation data includes a power consumption and a gas consumption,
the social model data includes a gas demand and a power demand,
the observation data conversion unit (1031) acquires sensible heat information based on the power consumption and the gas consumption, and acquires water vapor information based on the gas consumption, and
the social model conversion unit (1032) acquires a heat generation amount based on the gas demand and the power demand, and acquires a water vapor generation amount based on the gas demand.

3. The information conversion apparatus according to claim 1, wherein the information conversion apparatus comprises a database (1033) configured to record past information about the observation data and the weather data, and
the observation data conversion unit (1031) refers to the past information recorded in the database (1033), and converts the observation data.

4. A weather prediction system comprising:
a weather sensor (21) configured to generate weather data by observing a weather element;
a social sensor (111, 121, 131, 141, 142, 151) configured to generate observation data by observing a quantity of state in a social infrastructure (11, 12, 13, 14, 15);
a social model calculation apparatus (104) configured to integrated the weather data, the observation data, and weather model data that predicts weather in a local region into a social model that simulates a social activity in a social infrastructure (11, 12, 13, 14, 15) and execute a simulation by the social model, thereby calculating social model data that predicts the quantity of state in the social infrastructure (11, 12, 13, 14, 15);
an information conversion apparatus (103, 105) configured to convert the observation data into first conversion data in a format reflectable on a weather model formed in advance and convert the social model data into second conversion data in the format reflectable on the weather model; and
a weather model calculation apparatus (102) configured to integrate wide area weather prediction information, the weather data, the first conversion data, and the second conversion data into the weather model and execute a simulation by the weather model, thereby calculating the weather model data.

5. The weather prediction system according to claim 4, wherein the observation data includes a power consumption and a gas consumption,
the social model data includes a gas demand and a power demand, and
the information conversion apparatus (103, 105) acquires sensible heat information based on the power consumption and the gas consumption, acquires water vapor information based on the gas consumption, acquires a heat generation amount based on the gas demand and the power demand, and acquires a water vapor generation amount based on the gas demand.

6. The weather prediction system according to claim 4, wherein the information conversion apparatus (103, 105) records past information about the observation data and the weather data, refers to the past information, and converts the observation data.
